Europäisches Patentamt

European Patent Office

Office européen des brevets

(11) Veröffentlichungsnummer: **0 405 336 A2**

## (12) EUROPÄISCHE PATENTANMELDUNG

(21) Anmeldenummer: **90111794.5**

(22) ·Anmeldetag: **21.06.90**

(51) Int. Cl.⁵: **H01R 9/24**

(30) Priorität: **28.06.89 DE 3921208**

(43) Veröffentlichungstag der Anmeldung:
**02.01.91 Patentblatt 91/01**

(84) Benannte Vertragsstaaten:
**AT BE CH DE DK ES FR GB GR IT LI NL**

(71) Anmelder: **Siemens Aktiengesellschaft**
**Wittelsbacherplatz 2**
**D-8000 München 2(DE)**

(72) Erfinder: **Scholtholt, Hans, Dipl.-Ing.(FH)**
**Tannenstrasse 4**
**D-8044 Lohhof(DE)**

(54) Verteilereinrichtung für Telekommunikationsanlagen.

(57) Die zu den Vermittlungseinrichtungen der Anlage führenden Systemleitungen (10) eines Systemkabels sind bereits werkseitig in Halteschlitze (14) eines Fixierteils (13) eingesetzt und werden zusammen mit diesem geliefert. Das Fixierteil ist Bestandteil eines Halteteils (9) für eine Anschlußleiste mit rückseitig vorstehenden Schneidklemmen (7). Beim Aufsetzen der Anschlußleiste drücken sich die anschlußgerecht fixierten Enden der Systemleitungen (10) in die Klemmschlitze der Schneidklemmen (7). Dadurch wird der Montageaufwand erheblich verringert.

FIG 3

## VERTEILEREINRICHTUNG FÜR TELEKOMMUNIKATIONSANLAGEN

Die Erfindung bezieht sich auf eine Verteilereinrichtung für Telekommunikations-, insbesondere Fernsprechanlagen mit einer Anschlußleiste für ankommende und abgehende Leitungen.

Eine derartige Anschlußleiste ist zum Beispiel durch die Unterlagen des deutschen Gebrauchsmuster 7809651 bekannt geworden. Danach sind von den Vermittlungseinrichtungen ankommende Systemleitungen als Leiterbahnen einer Leiterplatte ausgebildet, auf die die Anschlußleiste mit ihrer Rückseite aufgesetzt ist. Die Leiterbahnen sind mit Kontaktteilen der Anschlußleiste kontaktiert, die sich geradlinig zur Fromtseite der Anschlußleiste erstrecken und dort als Schneidklemmen ausgebildet sind, an die zu den Teilnehmern führende abgehende Leitungen angeschlossen werden können.

Ferner ist es durch die deutsche Offenlegungsschrift 2814018 (Fig. 12) bekannt, die Kontaktteile auf ihrer Rückseite ebenfalls als Schneidklemmen auszubilden, an die die als Schaltdrähte ausgebildeten Systemleitungen angeschlossen werden können.

Es ist üblich, die von den Vermittlungseinrichtungen zum Verteiler führenden Kabel bereits mit einem systemseitig angeschlossenen Stecker zu liefern. Die Zuordnung der einzelnen Adern am anderen Ende des Kabels zu den Anschlußelementen erfolgte erst nach dem Anbringen der Anschlußleisten an den Verteilern.

Der Erfindung liegt die Aufgabe zugrunde, daß Anschließen der Leitungen an die Anschlußleisten zu vereinfachen.

Diese Aufgabe wird durch die Erfindung gemäß Anspruch 1 gelöst. Der besondere Vorteil dieser Lösung besteht darin, daß nun auch die verteilerseitigen Adernenden bereits werkseitig zum Anschluß an die Anschlußleisten vorbereitet werden können. Das Aufteilen der einzelnen Andern auf die Halteschlitze des Fixiersteils wird mit Hilfe von Spzezialgeräten werkseitig vorgenommen. Dadurch wird die Gefahr von Zuordnungsfehlern verringert. Das Kabel wird dann mit den Fixierteilen und dem Stecker geliefert. Das Fixierteil kann sodann noch vor dem Aufsetzen der Anschlußleisten am Halteteil befestigt werden. Die Anschlußleisten werden erst im Zuge des Ausbaus der Vermittlungsanlage nach Bedarf aufgesetzt.

Beim Aufsetzen der Anschlußleiste werden die Schneidklemmen in Freimachungen zwischen den Halteschlitzen eingeschoben. Dabei werden die querstehenden Adernenden von den Schneidklemmen erfaßt und in deren Klemmschlitze eingedrückt. Beim Eindrücken wird die Isolation der Leitungen bis auf den Leitungskern entfernt, sodaß ein direkter Kontakt zwischen der Schneidklemme und dem Drahtkern hergestellt wird. Da dabei alle Leitungen gleichzeitig angeschlossen werden, verringert sich der Montageaufwand erheblich.

Vorteilhafte Weiterbildungen der Erfindung sind in den Ansprüchen 2 bis 7 gekennzeichnet:

Durch die Weiterbildung nach Anspruch 2 kann das Fixierteil relativ klein gehalten werden, was den Transport erleichtert. Ferner können die Adern auch bündelweise auf mehrere kleine Fixierteile verteilt werden. Dadurch ist es möglich, das Kabel bei seiner Verlegung leichter durch Engstellen hindurchzuführen.

Im Halteteil nach den Ansprüchen 3 und 4 ist das Fixierteil kostengünstig integriert. Diese Lösung kommt insbesondere dann in Betracht, wenn zwischen der Vermittlungsanlage und dem Verteiler keine Engstellen vorhanden sind.

Durch die Weiterbildung nach Anspruch 5 kann das Halteteil an der Tragschiene befestigt werden, ohne daß dazu an dieser Befestigungslöcher oder ähnliche Durchbrüche vorhanden sein müssen.

Die Tragschiene kann also als einfaches durchgehend glattes Profilteil ausgebildet werden.

Durch die Weiterbildung nach Anspruch 6 wird der zum Beispiel mit dem Schirmmantel des Kabels verbundene Erdleiter in einfacher Weise mit der Tragschiene kontaktiert, ohne daß es dazu besondere Vorkehrungen bedarf.

Durch die Weiterbildung nach Anspruch 7 wird der Erdleiter bzw. die Tragschiene vor Beschädigung durch die Klemmschraube geschützt.

Im folgenden wird die Erfindung anhand eines in der Zeichnung dargestellten Ausführungsbeispieles näher erläutert. Es zeigen:

Fig. 1 eine Seitenansicht auf eine Anschlußleiste für einen Verteiler in einer Telekommunikationsanlage,

Fig. 2 eine Draufsicht auf die Anschlußleiste nach Fig. 1,

Fig. 3 eine Stirnansicht der Anschlußleiste nach Fig. 2 mit einem Halteteil für die Anschlußleiste unmittelbar vor dem Zusammenfügen,

Fig. 4 eine Seitenansicht der Teile nach Fig. 3 nach dem Zusammenfügen,

Fig. 5 eine Draufsicht auf das Halteteil nach Fig. 4.

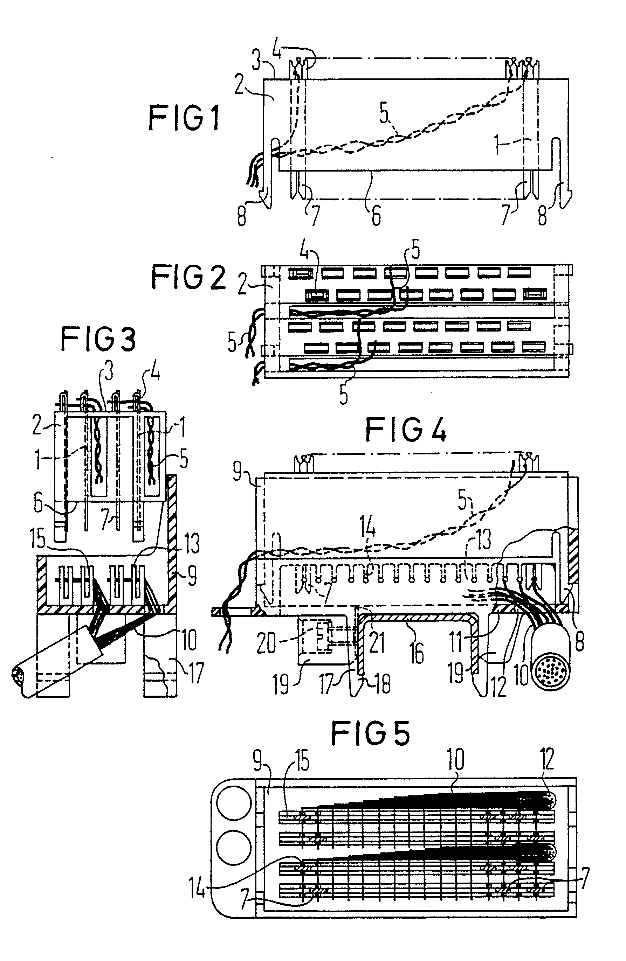

Nach den Fig. 1 und 2 sind zwei Doppelreihen von Kontaktteilen 1 in ein Gehäuse 2 einer Anschlußleiste eingesetzt. Innerhalb einer Doppelreihe sind die Kontaktteile zueinander auf Lücke versetzt angeordnet. Die Kontaktteile 1 sind auf ihrer Bedienungsseite 3 als Anschlußelemente 4 für abgehende Teilnehmerleitungen 5 ausgebildet. Auf der der Bedienungsseite 3 gegenüberliegenden Rückseite 6 der Verteilerleiste sind die Kontaktteile 1 als Schneidklemmen 7 ausgebildet, die aus dem Gehäuse 2 senkrecht herausragen. Auf den Stirnseiten der Anschlußleiste sind Rasthaken 8 angeordnet, die in die Richtung der Schneidklemmen 7 ragen und mit nach außen weisenden Rastnasen versehen sind.

Nach den Fig. 3, 4 und 5 ist das Gehäuse 2 mit dem Kontaktteil 1 in ein wannenartiges Halteteil 9 einsetzbar und darin mittels der Rasthaken 8 verrastbar. Ein Kabel mit ankommenden Systemleitungen 10 ist auf der Rückseite des Halteteils an diesem in nicht näher dargestellter Weise befestigt. Ein Boden 11 des Halteteils 9 weist Durchbrüche 12 für die Systemleitungen 10 auf.

Vom Boden 11 aus ragen kammartige Fixierteile 13 mit Halteschlitzen 14 den Schneidklemmen 7 entgegen. Die Fixierteile 13 sind einstückig mit dem Halteteil 9 verbunden. Sie erstrecken sich stegartig in der Reihenrichtung der Schneidklemmen 7, deren Materialebene mit dieser Richtung übereinstimmt. Sie sind mit Längsschlitzen 15 versehen, die als Freimachungen für die Schneidklemmen 7 dienen. Die Halteschlitze 14 erstrecken sich quer zu den Fixierteilen und stimmen in ihrer Lage mit den Klemmschlitzen der Schneidklemmen 7 überein.

Die Systemleitungen 10 sind von den Durchbrüchen 12 aus anschlußgerecht zu den Halteschlitzen 14 geführt und in diese klemmend eingedrückt. Beim Aufsetzen der Anschlußleiste mit den Schneidklemmen 7 ergreifen diese die Enden der Systemleitungen 10, die sich dabei in deren Klemmschlitze eindrücken. Bei diesem Vorgang wird die Isolation der Systemleitungen 10 durchtrennt, sodaß die Schneidklemmen 7 direkt mit dem Kern der Systemleitungen 10 kontaktiert werden.

Die Systemleitungen 10 werden bereits werkseitig mit dem Halteteil verbunden und zusammen mit diesem geliefert. Das Halteteil 9 ist rückseitig an einer im Querschnitt U-förmigen Tragschiene 16 befestigt. Diese erstreckt sich quer zur Längsrichtung des Halteteils 9. Auf diese Weise können mehrere Halteteile 9 für jeweils eine Anschlußleiste an der Tragschiene aneinander gereiht werden.

Das Halteteil 9 weist hakenartige Rastlappen 17 auf, die die Tragschiene gabelartig umgreifen. Dabei hintergreifen Rastnasen 18 die Seitenschenkel der Tragschiene 16. Damit ist das Halteteil gegen ein Abziehen von der Tragschiene gesichert.

Das Halteteil 9 ist außerdem noch mit rückseitigen Klemmklötzen 19 zu beiden Seiten der Tragschiene 16 versehen. Einer der Klemmklötze 19 weist eine Klemmschraube 20 auf, die gegen einen Seitenschenkel der Tragschiene geschraubt werden kann. Dadurch verspannt sich das Halteteil mit den Klemmklötzen 20 an der Tragschiene 16 sodaß es in deren Längsrichtung fixiert wird. Zwischen der Klemmschraube 19 und dem Seitenschenkel der Tragschiene 16 ist ferner ein Federblech 21 angeordnet. Zwischen diesem und der Tragschiene kann ein Erdungsdraht des Systemkabels eingeklemmt und mit der Tragschiene konkaktiert werden. Das Federblech 21 schützt dabei den Erdungsdraht und die Tragschiene vor Beschädigung durch die Klemmschraube 20.

## Ansprüche

1. Verteilereinrichtung für Telekommunikations-, insbesondere Fernsprechanlagen mit einer Anschlußleiste, die mit Schneidklemmen (7) für von einer Vermittlungsanlage ankommende Systemleitungen (10) und Anschlußelementen (4) für zu den Teilnehmern führende abgehende Leitungen (5) versehen ist, wobei die Anschlußleiste mit ihrer Rückseite (6) auf ein Halteteil (9) aufsetzbar ist und wobei auf der Rückseite (6) die Schneidklemmen (7) für die Systemleitungen (10) in der Aufsetzrichtung herausragen,

**dadurch gekennzeichnet,**

daß die Adernenden der Systemleitungen in Halteschlitzen (14) zumindest eines kammartigen Fixierteils (13) entsprechend der Lage der Schneidklemmen (7) quer zu diesen anschlußgerecht gehalten sind und daß das Fixierteil (13) am Halteteil (9) festgelegt ist.

2. Verteilereinrichtung nach Anspruch 1,

**dadurch gekennzeichnet,**

daß das separate Fixierteil in das Halteteil einsetzbar ist.

3. Verteilereinrichtung nach Anspruch 1,

**dadurch gekennzeichnet,**

daß das Fixierteil (13) einstückig mit dem Halteteil (9) verbunden ist.

4. Verteilereinrichtung nach Anspruch 1, 2 oder 3,

**dadurch gekennzeichnet,**

daß jeder Anschlußleiste ein eigenes Halteteil (9) zugeordnet ist.

5. Verteilereinrichtung nach Anspruch 4,

**dadurch gekennzeichnet,**

daß das Halteteil (9) auf eine sich quer zur Anschlußleiste erstreckende Tragschiene (16) aufsetzbar ist und daran mittels federnder Rastlappen (17) gehalten ist und daß das Halteteil (9) eine Klemmschraube (20) zur Fixierung an der Tragschiene (16) in deren Längsrichtung aufweist.

6. Verteilereinrichtung nach Anspruch 5,

**dadurch gekennzeichnet,**

daß ein Erdleiter eines die Systemleitungen (10) enthaltenen Systemkabels mittels der Klemmschraube (20) mit der Tragschiene (16) kontaktierbar ist.

7. Verteilereinrichtung nach Anspruch 5 oder 6,

**dadurch gekennzeichnet,**
daß in das Halteteil (9) ein Federblech (21) eingesetzt ist, daß durch die Klemmschraube (20) gegen die Tragschiene (16) gedrückt wird.

FIG1

FIG2

FIG3

FIG4

FIG5